# EUROPEAN PATENT SPECIFICATION

(11) **EP 2 914 445 B1**
(45) Date of publication and mention of the grant of the patent: **05.12.2018**
(21) Application number: 13819066.5
(22) Date of filing: 29.10.2013
(51) Int. Cl.: B60C 11/04, B60C 11/12

(54) **METHOD FOR INCREASING THE PERFORMANCE OF A TYRE FOR HEAVY LOAD VEHICLE WHEELS AND TYRE FOR HEAVY LOAD VEHICLE WHEELS**
VERFAHREN ZUR ERHÖHUNG DER LEISTUNG EINES REIFENS FÜR SCHWERLASTENFAHRZEUGRÄDER UND REIFEN FÜR SCHWERLASTENFAHRZEUGRÄDER
PROCÉDÉ POUR AUGMENTER LES PERFORMANCES D'UN PNEU POUR ROUES DE VÉHICULE POUR CHARGES LOURDES ET PNEU POUR ROUES DE VÉHICULE POUR CHARGES LOURDES

(30) Priority: 30.10.2012 IT RM20120519; 30.01.2013 US 201361758520 P
(43) Date of publication of application: 09.09.2015
(73) Proprietor: Pirelli Tyre S.p.A., 20126 Milano (IT)
(72) Inventor: CASTELLINI, Alessandro, I-20126 Milano (IT)
(74) Representative: Fabiano, Piero
(86) International application number: PCT/IB2013/002402
(87) International publication number: WO 2014/068385

(56) References cited:
- WO-A1-2009/077808
- WO-A1-2012/001488
- US-A1- 2007 187 014
- US-A1- 2009 038 723

## Description

### FIELD OF THE INVENTION

The present invention relates to a method for increasing the performance of a tyre for heavy load vehicle wheels and to a tyre for heavy load vehicle wheels.

### PRIOR ART

In the technical field of tyres, documents WO2009077807, WO2009077808 and WO2012001488 to the Applicant, and US20070187014, correspondig to the preamble of claim 1, JP2000-025419 relate to tyres for heavy load vehicle wheels. A further tyre for heavy load vehicle wheels is disclosed by US2009/0038723.

### SUMMARY OF THE INVENTION

Tyres intended for use on heavy load vehicles are typically required to have excellent traction, steerability and controllability features.

Another feature required from this kind of tyres is a limited and/or as far as possible regular wear, in order to increase the performance of the tyres in terms of mileage and to reduce their noise and vibrations while running.

The above-mentioned features are partially conflicting with one another. In particular, in the Applicant's experience, it is difficult to ensure an excellent tyre performance in terms of traction, roadholding both on dry and wet ground, controllability and steerability without affecting to some extent the tyre performance in terms of wear, mileage and running noise/vibrations.

Particularly tyres intended to be used on heavy load vehicles for e.g. medium- and long-range transportation on asphalted highways (e.g. motorways or freeways) are required to have a very low rolling resistance and wear evenness.

The Applicant has observed that, in order to reduce the rolling resistance and provide wear evenness particularly in tyres for heavy load vehicles intended for use e.g. on motorways, it is convenient to limit the width of the transverse grooves separating the blocks, so as to increase the "amount of rubber to the ground".

Moreover, the Applicant has observed that, in order to obtain good traction and water draining features on wet grounds in a tread intended for this kind of vehicles, it is convenient to provide transverse sipes having a high depth and a profile that allows a proper mutual meshing of adjacent blocks and an adequate opening and closing of the sipe at the footprint area as the tyre moves.

However, the Applicant has observed that a large number of deep transverse sipes having a shape such that portions for mutual meshing are defined in adjacent blocks may, on the one hand, be advantageous for improving the tyre performance in terms of traction, pickup and lateral stability, on the other hand may cause, beside a worsening of the tyre performance in terms of mileage, excessive and/or uneven wear phenomena in the tread band as well as disturbing vibrations and noise.

The Applicant believes that the arising of excessive and/or uneven wear phenomena in the tread band, as well as of disturbing vibrations and noise, is caused to a non-negligible extent by the continuous mutual rubbing of the walls of adjacent blocks during the opening and closing of the transverse sipes mainly when the blocks come in contact or leaving contact with the road surface, in the so-called tyre footprint area.

The Applicant has supposed that the reciprocally conflicting problems discussed above can be overcome by means of a tread pattern comprising in the central region at least one row of blocks circumferentially separated by preferably deep sipes, and wherein the blocks are provided with at least one first deformation, adapted to define respective portions of mutual constraint in adjacent blocks, and with a secondary deformation grafted on the first deformation in the circumferential direction.

It has been observed that the secondary deformation counteracts the mutual sliding of the blocks in the radial direction without hindering their mutual opening and closing movement. Traction is thus preserved and wear evenness is improved thanks to the mutual constraint in radial direction of adjacent blocks that reduces the misalignment of the radially outer surfaces of the blocks while rolling and while the radially outer surface passes in the footprint area.

The Applicant has found that, in order to avoid uneven wear phenomena, the secondary deformation is suitably arranged centrally relative to the wall of the block on which it lies, has a limited extension in transverse direction and is oriented according to a predetermined extension direction relative to tyre rolling direction.

According to a first aspect thereof, the present invention relates to a method for increasing the performance of a tyre for vehicle wheels as defined by the features of appended claim 21.

In the Applicant's view it is possible to achieve an increase in performance, for example in traction, pickup, drivability on dry and wet grounds, drainage, achieving at the same time a reduction in rolling resistance and an improvement of wear evenness, by suitably combining and varying in terms of number, dimensions, etc., the presence, localization, extension and orientation relative to the circumferential direction of said surfaces of mutual constraint.

The Applicant has found that a central location of the secondary deformation prevents or substantially reduces the misalignment of the radially outer surfaces in the sipe portion where this phenomenon is more pronounced, and, at the same time, a limitation of its extension in transverse direction does not lock too much the opposite walls of the sipe, allowing them to provide their contribution in terms of controllability, drainage and traction.

In particular, it has been found that the extension direction of the secondary deformation, opposite to rolling direction, allows increasing both the strength of the lateral wall of the block, which counteracts the triggering of uneven wear phenomena, and the irregular shape of the wall itself, which increases the effectiveness of the mutual constraint between opposite walls of the block.

According to a second aspect thereof, the present invention relates to a tyre having a tread comprising a central annular portion across an equatorial plane and two shoulder annular portions, located on axially opposite sides relative to the central annular portion, the central annular portion being separated from each shoulder annular portion by a respective first circumferential groove,

The central annular portion may comprise a plurality of blocks, arranged in at least one circumferential row comprised between two circumferential grooves, and at least one transverse sipe adapted to separate two circumferentially adjacent blocks.

Each block is thus circumferentially delimited, by means of two consecutive sipes, by two opposite walls extending with a substantially transverse course relative to the equatorial plane of the tyre and with a substantially radial course from the bottom of the sipe to the radially outermost surface of the block.

On at least one of the opposite transverse walls of a first block there is at least one first deformation adapted to define first portions of mutual constraint together with at least one adjacent block.

The first deformation defines a first constraint together with a corresponding first deformation present on the facing wall of a second block circumferentially adjacent to the first block. The first constraint acts at least in a circumferential direction. In other words, this first constraint tends to hinder a separation in circumferential direction of the first and second blocks from each other.

On at least one of the opposite transverse walls of the first block there is at least one second deformation adapted to define second portions of mutual constraint together with at least one adjacent block.

The second deformation defines a second constraint together with a corresponding second deformation present on the facing wall of said second block circumferentially adjacent to said first block. The second constraint acts at least in a radial direction. In other words, this second constraint tends to hinder the mutual sliding in radial direction of the facing walls of the first and second blocks.

The second deformation extends at least on the first deformation so that said first and second deformations are located at the same wall portion of the block.

The second deformation may extend in a central portion on the transverse wall of the first and/or second block with an axial extension smaller than 70% of the axial extension of the transverse wall of the first and/or second block.

The second deformation may circumferentially extend on the first deformation in a direction opposite to the rolling direction of the tyre.

In other words, the second deformation has a substantially circumferential extension and develops defining a recess or a projection, based on the wall on which it is formed, in a direction opposite to the rolling direction of the tyre.

The second deformation extends axially so as to have a course located at different radial depths.
- By "sipe", it is meant a thin groove, for example a groove having a width not greater than 3 mm.
- By "width" of a deformation, it is meant the maximum extension of the deformation measured in the same direction of the course of the wall being considered.
- By "depth" of a deformation, it is meant the maximum extension of the deformation measured in a direction perpendicular to the course of the wall being considered.
- By "ridge" of a deformation, it is meant the portion of the deformation which is furthest from the surface from which the deformation itself stems. This surface may be either the wall of the block or the surface of a deformation on which a further deformation is grafted.
- By "equatorial plane" of the tyre, it is meant a plane perpendicular to the rotation axis of the tyre and dividing the tyre into two symmetrically equal portions.
- By "circumferential" direction, it is meant a direction generically directed according to the rotation direction of the tyre, or in any case only slightly inclined with respect to the rotation direction of the tyre.
- By "axial" direction or "axially", it is meant a direction parallel to, or in any case only slightly inclined relative to the rotation axis of the tyre.
- By "radial" direction or "radially", it is meant a direction substantially orthogonal to the rotation axis of the tyre.

The width of the circumferential grooves and/or of the sipes may be measured taking the width of the radially outer edges of the grooves and/or sipes themselves as a reference.

Advantageously, the second deformation may have an axial extension greater than 10% of the axial extension of the transverse wall of the block.

Preferably, the second deformation has a width smaller than 30% of the maximum depth (h) of the sipe.

On at least one of the opposite transverse walls of the first block at least one third deformation may be present having a depth altogether decreasing from an axial end of the transverse wall of the first block towards a central region of said transverse wall, wherein said third deformation has maximum radial extension smaller than 30% of the maximum depth (h) of the sipe. The third deformation defines a third constraint together with a corresponding third deformation present on the facing wall of the second block circumferentially adjacent to the first block, said third constraint acting at least in a radial direction.

The Applicant has found that the presence and such a course of a third deformation improves the interaction between the walls of adjacent blocks in the footprint area. In particular, the third deformation provides a constraint against mutual sliding in radial direction of the opposite walls of the block in the block portion near the longitudinal grooves. Furthermore, the third deformation makes up for the lack of structural constraint due to the gap in the tread band caused by the longitudinal groove.

For not locking too much the motion in radial direction of the opposite walls of adjacent blocks in the footprint area, conveniently the third deformation has an axial extension smaller than 50% of the axial extension of the wall of the first and/or second block.

Advantageously, the third deformation has an axial extension greater than 5% of the axial extension of the transverse wall of the first and/or second block.

Preferably, the third deformation may have an axial extension of between 10% and 30% of the axial extension of the wall of the first and/or the second block.

Preferably, the third deformation extends at least on the first deformation so that the first and third deformations are located at the same transverse wall portion of the first and/or second block.

Conveniently, the third deformation circumferentially extends at least on the transverse wall of the first and/or second block in a direction opposite to the rolling direction of the tyre.

Preferably, the third deformation extends in an axial direction on the transverse wall of the first and/or second block so that the third and second deformations do not have axially superimposed segments.

According to the Applicant, such a choice represents the optimal trade off between the need of providing a constraint against the mutual sliding in radial direction of opposite walls of two adjacent blocks, when entering in and leaving the footprint area, and the opposite need of not locking excessively the motion of the blocks. An excessive hindrance to the sliding of adjacent walls of the blocks could in fact cause a worsening of the tyre performance.

Advantageously, in order to obtain a uniform distribution of the portions of mutual constraint, two pairs of third deformations are present on each opposite transverse wall of two circumferentially adjacent blocks.

Preferably, each pair of third deformations may be located opposite to the other pair relative to the central portion of the transverse wall of the first and/or second block.

Advantageously, each pair of third deformations has two substantially equal third deformations located at different radial depths of the transverse wall of the first and/or second block on which they lie.

Advantageously, the ridge of the second deformation may be located at a radial depth of between 30% and 70% of the maximum depth (h) of the sipe.

Preferably, the ridge of the second deformation is defined by at least two inclined portions opposed to each other so as to form substantially a corner.

Conveniently, the second deformation may comprise a ridge located at a radially outer position relative to half the maximum radial depth of the sipe.

Preferably, the ridge of the second deformation may have an extension equal to or greater than about 20% of the axial extension of the whole transverse wall of the block.

Conveniently, at least one first deformation comprises at least two undercut portions in a circumferential direction, which extend on opposite sides relative to a plane perpendicular to the transverse wall of the block.

Preferably, the two undercut portions may extend radially over the whole depth of the transverse sipe.

Conveniently, each transverse wall of the block of a circumferential row may have two first deformations axially in side-by-side relationship.

Additionally, the two first deformations present on a transverse wall of the block may have mutually opposite orientations along a circumferential direction. In other words, the transverse wall of the block may have a first deformation which projects from the wall and a first deformation which defines a recess in the wall.

Preferably, the first deformations located in a substantially corresponding position of two circumferentially consecutive sipes have circumferentially a same orientation.

According to another aspect, the present invention relates to a tread band for a tyre for vehicle wheels as defined by the features of appended claim 20.

The description made above, with reference to the tread band of the first aspect of the invention, may be repeated also for the tread band of the second aspect of the invention.

The tyre of the invention has an excellent running behaviour, both on dry and wet road surface, as well as good traction during its entire service life.

The excellent traction and steerability features of the tyre of the present invention make the same particularly suitable for fitting on traction wheels of heavy load vehicles.

Furthermore, the tyre of the invention also has low rolling resistance features and even wear features, which make the same suitable for fitting on wheels of heavy load vehicles intended to travel long distances on motorways or highways.

Further features and advantages of present invention will now be presented with reference to embodiments shown as non-limiting examples in the accompanying figures, wherein:

### BRIEF DESCRIPTION OF THE DRAWINGS

- Fig. 1 shows a sectional view of a tyre according to the present invention;
- Fig. 2 shows a plan view of a tread portion of a tyre according to the present invention;
- Figs. 3 and 4 show perspective views of an embodiment of mutually constrainable block portions which can be used in the tread of a tyre according to the invention;
- Fig. 5 shows a plan view of a portion of the tread of figure 2 with highlighted block portions;
- Fig. 6 shows an element which can be used in a mould in order to create, in the tread, sipes as in figure 2, and to shape the walls of the adjacent blocks as shown in figures 3 and 4.

### DETAILED DESCRIPTION OF EMBODIMENTS OF THE INVENTION

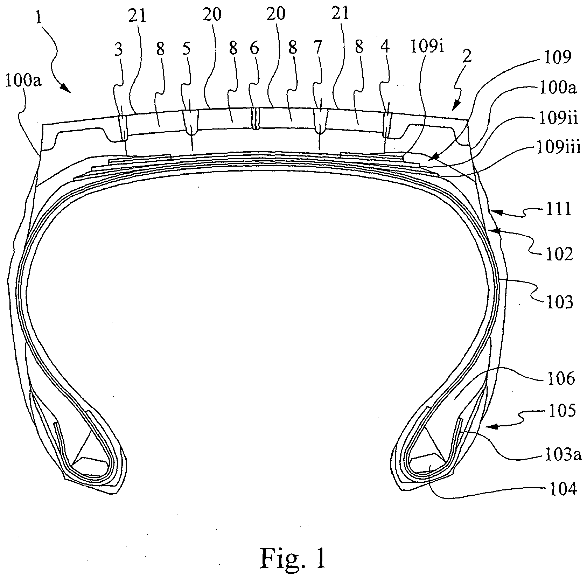

In figure 1 a tyre for vehicle wheels according to the present invention, in particular a tyre intended for traction or steering wheels of a heavy load vehicle, is generally indicated at 1.

In the following description and in the appended claims, by the expression: "heavy load vehicle" it is meant a vehicle belonging to classes M2-M3, N2∼N3 and O2∼O4 defined in "Consolidated Resolution of the Construction of Vehicles (R.E.3) (1997)", Annex 7, pages 52-59, "Classification and definition of power-driven vehicles and trailers", such as for example trucks, lorries, tractors, busses, vans and other vehicles of this kind.

The tyre 1 comprises a carcass structure 102, including at least one carcass ply 103, preferably two carcass plies 103, formed by reinforcing cords, typically made of metal, incorporated into an elastomeric matrix.

The carcass ply 103 has opposite end edges 103a engaged with respective bead rings 104. The latter are located in regions 105 of the tyre 1 usually called "beads".

An elastomeric filling 106 taking up the space defined between the carcass ply 103 and the respective end edge 103a of the carcass ply 103 is applied onto the outer perimeter edge of the bead rings 104. The bead rings 104 hold the tyre 1 firmly fixed to an anchoring seat provided for this purpose in the wheel rim, thus preventing the bead 105 from coming out from such a seat during operation.

At the beads 105 specific reinforcing structures (not shown) may be provided, which have the function of improving the torque transmission to the tyre 1.

In a radially outer position relative to the carcass ply 102 a belt structure 109 is provided, which preferably comprises several belt layers (three layers 109i, 109ii, 109iii are shown in this specific example) arranged radially one on top of the other and having reinforcing cords, typically made of metal, with a crossed orientation and/or substantially parallel to the direction of circumferential development of the tyre 1.

A tread band 2, made as well of an elastomeric material, is applied in a radially outer position relative to the belt structure 109.

On the lateral surfaces of the carcass structure 102 respective sidewalls 111 made of an elastomeric material are further applied, each extending from one of the opposite lateral edges 100a of the tread band 2 up to the respective annular structure 104 for anchoring to the beads 105.

Referring to figures 1-2, the tread band 2 comprises a central portion L1 and two shoulder portions L2; L3.

The central portion L1, arranged across the equatorial plane X-X, is visually separated from the shoulder portions L2; L3 by two first circumferential grooves 3, 4.

The first circumferential grooves 3, 4 are mainly provided for ensuring the drainage of water from the footprint area, particularly when the tyre is running on a straight path.

For this purpose, the first circumferential grooves 3, 4 may have a width greater than 2 mm. Preferably, the first circumferential grooves 3, 4 may have a width greater than 3 mm, in any case smaller than 20 mm, preferably smaller than 15 mm, for example equal to 7 mm.

Advantageously, the first circumferential grooves 3, 4 may have a depth greater than 10 mm, preferably greater than 15 mm, in any case smaller than 30 mm, for example equal to 18 mm.

The choice of providing the first circumferential grooves 3, 4 with a relevant depth allows good drainage features to be achieved.

More preferably, the first circumferential grooves 3, 4 do not have circumferentially a straight course, but a swerved one.

In other words, the first circumferential grooves 3, 4 preferably extend over the whole circumferential development of the tyre 1 with a course forming a broken line wherein first circumferential portions parallel to the equatorial plane X-X and second circumferential portions inclined relative to the equatorial plane X-X are present. The second portions extend so as to connect said first portions. In this way, the traction of the tread band 2 in the advancing direction of the tyre is advantageously increased.

Moving axially towards the equatorial plane X-X, the tread band has two second circumferential grooves 5, 7 located axially inwardly relative to the two first circumferential grooves 3, 4.

The second circumferential grooves 5, 7 may have a width greater than the first circumferential grooves 3, 4.

Preferably, the second circumferential grooves 5, 7 have a width greater than 2 mm. Preferably, the second circumferential grooves 5, 7 may have a width greater than 3 mm, in any case smaller than 25 mm, for example equal to 12 mm.

Advantageously, the second circumferential grooves 5, 7 may have a depth greater than 10 mm, preferably greater than 15 mm, in any case smaller than 30 mm, for example equal to 18 mm.

The choice of providing the second circumferential grooves 5, 7 with relevant depth and width allows good drainage features to be achieved.

More preferably, the second circumferential grooves 5, 7, as well as the first circumferential grooves 3, 4, do not have circumferentially a straight course, but a swerved one.

In other words, the second circumferential grooves 5, 7 preferably extend over the whole circumferential development of the tyre 1 with a course forming a broken line wherein first circumferential portions parallel to the equatorial plane X-X and second circumferential portions inclined relative to the equatorial plane X-X and connecting said first portions with each other are present. In this way, the traction of the tread band 2 in the advancing direction of the tyre is advantageously increased.

A third circumferential groove 6 may be preferably located across the equatorial plane X-X of the tyre.

The third circumferential groove 6 has a substantially "zigzag" course, comprising a plurality of first inclined portions 6a alternated with a plurality of second portions 6b counter-inclined relative to the first inclined portions 6a.

Preferably, the maximum depth of the tread band 2 (and thus the maximum depth of the circumferential grooves 3, 4, 5, 6, 7 and of the transverse sipes 8 described below) is comprised between about 10 mm and about 25 mm, such a depth being more preferably equal to about 22 mm.

The central portion L1 is designed so as to provide a low rolling resistance and wear evenness during the entire service life of the tyre.

In detail, in the embodiment shown in figures 1-2, the central portion L1 has four circumferential rows 9, 10, 11, 12 of blocks, two circumferential rows 9, 10 of central blocks 20 and two circumferential rows 11, 12 of lateral blocks 21.

The circumferential rows 11, 12 of lateral blocks 21 are located outwardly relative to the circumferential rows 9, 10 of central blocks, so that each circumferential row 11, respectively 12, of lateral blocks 21 is separated from a circumferential row 9, respectively 10, of central blocks by a circumferential groove 5, respectively 7.

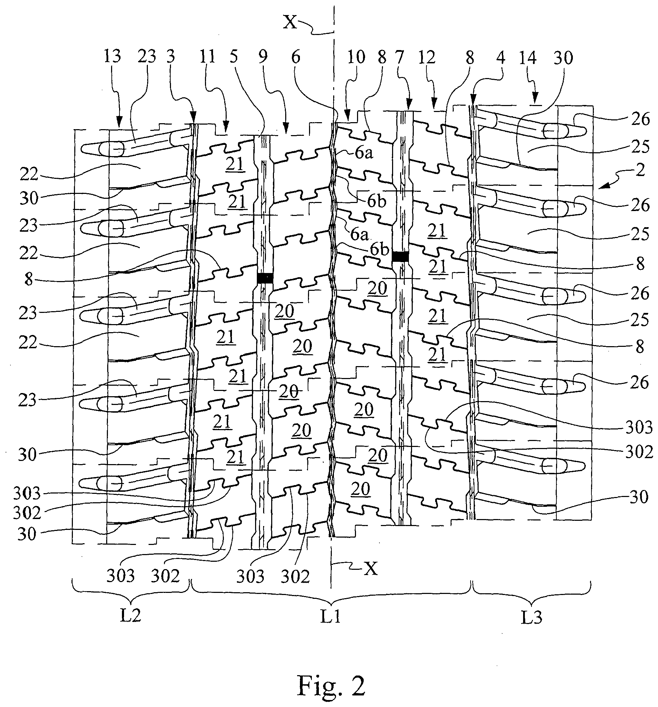

In the embodiment shown in figures 1, 2, the first circumferential row 11 of lateral blocks 21 is interposed between a first circumferential groove 3 and a second circumferential groove 5, whereas the second circumferential row 12 of lateral blocks 21 is interposed between a first circumferential groove 4 and a second circumferential groove 7.

In the embodiment of figures 1-2, the row 9 of central blocks 20 is thus interposed between a second circumferential groove 5 and the third circumferential groove 6.

Similarly, the central row 10 of central blocks 20 is interposed between a second circumferential groove 7 and the third circumferential groove 6.

Furthermore, the central blocks 20 of the first and second central circumferential rows 9, 10, as well as the blocks 21 of the first and second lateral circumferential rows 11, 12, are separated from one other in the circumferential direction by transverse sipes 8.

Preferably, in some embodiments such as that shown in figures 1-2, the transverse sipes 8 of each circumferential row 9, 10, 11, 12 of central blocks 20, or, respectively, of lateral blocks 21, are not circumferentially aligned with the transverse sipes 8 of the circumferential rows of axially adjacent blocks, but they are circumferentially staggered relative to them.

The transverse sipes 8 extend with an inclination relative to the equatorial plane X-X of the tyre 1. Preferably, the transverse sipes 8 of the circumferential rows 9, 10 of central blocks 20 have an inclination opposite to one other. Also the transverse sipes 8 of the circumferential rows 11, 12 of lateral blocks 21 have an inclination opposite to one another.

Additionally, the transverse sipes 8 of the circumferential row 9 of central blocks 20 have substantially the same inclination as the transverse sipes 8 of the lateral circumferential row 11 of lateral blocks 21, and the transverse sipes 8 of the circumferential row 10 of central blocks 20 have substantially the same inclination as the transverse sipes 8 of the lateral circumferential row 12 of lateral blocks 21.

In detail, the angle of inclination of the transverse sipes 8 of the circumferential rows 9, 10, 11, 12 of central blocks 20, or, respectively, lateral blocks 21, of the tread band 2 of figure 2 relative to the equatorial plane X-X of the tyre 1 is in the range between 90° and 140° (in absolute value).

In the tread pattern of figure 2, the transverse sipes 8 of all of the circumferential rows of blocks 20, 21, except for the inclination described above, have the same shape. For the sake of a simple presentation and of reading convenience, in the rest of the present description the shape of such transverse sipes will be described referring explicitly to the transverse sipes 8 of the circumferential row 9 of central blocks 20, being understood that what said holds also for the transverse sipes 8 of the remaining circumferential rows 10, 11, 12 of blocks of the central portion L1 of the tread band 2.

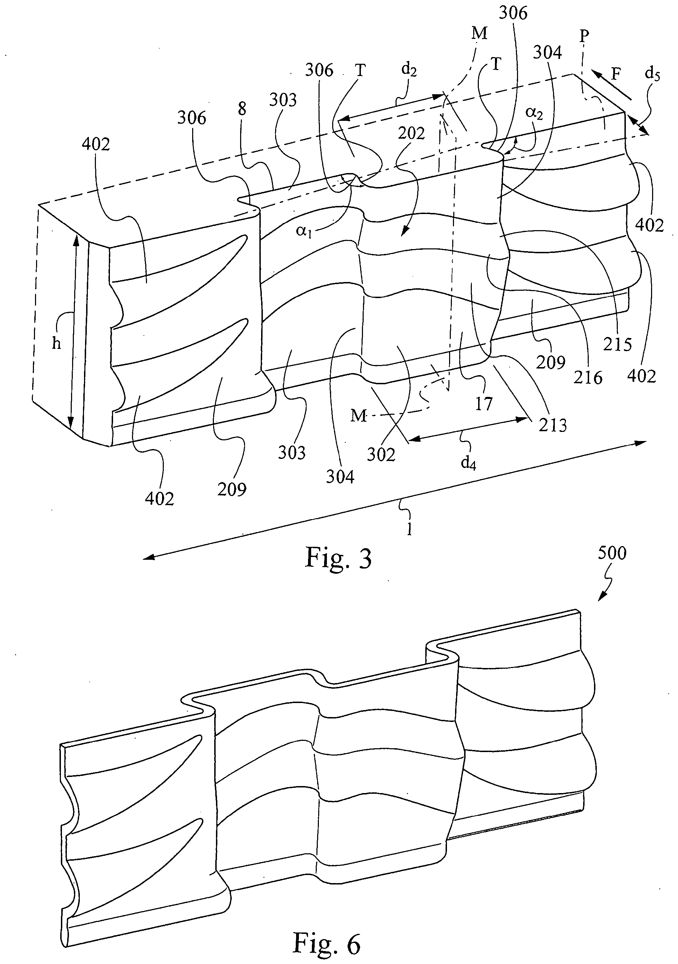

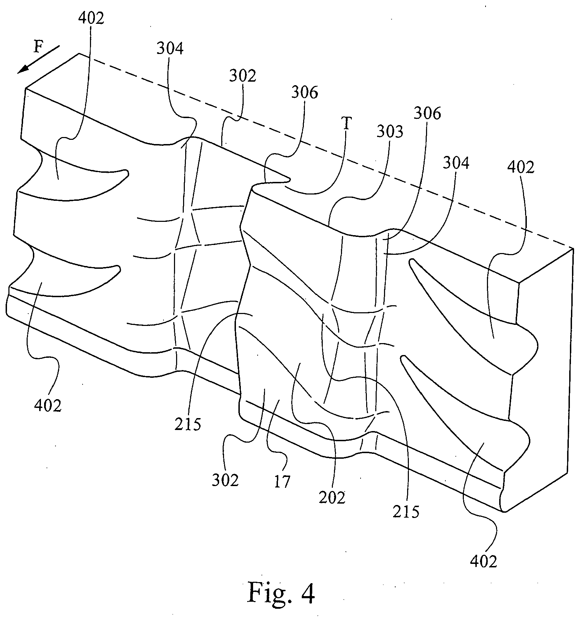

As can be seen particularly in figures 3 and 4, the block 20 defined by a transverse sipe 8 comprises a transverse wall 209 having a predetermined radial extension (or depth) h and a predetermined axial extension (or width) 1.

In the embodiment shown in the figures the axial extension (or width) 1 of the transverse wall 209 is the same as the axial extension of the sipe 8 itself.

Preferably, the depth h is comprised between 20% and 100% of the maximum depth of the tread band 2. The width 1 is preferably smaller than or equal to 55 mm.

The transverse wall 209 has at least one first deformation 302, 303 adapted to define, together with a block 20 which is circumferentially adjacent and forms the sipe 8 itself, respective portions of mutual meshing or constraint.

The first deformation defines a substantial deviation (e.g. a projection or a recess) relative to the substantially transverse course of the wall of the block.

In other words, the first deformation 302 or 303 on a first block 20, shown in figure 3, defines a first constraint with the corresponding first deformation 302 or 303 on the facing wall 209 of a second block 20 circumferentially adjacent to the first block 20, shown for example in figure 4. The first constraint acts at least in the circumferential direction. In other words, such a first constraint tends to hinder a separation in the circumferential direction of the first and second blocks 20.

Preferably, in the embodiment shown in figures 3 and 4 each transverse wall 209 has two first deformations 302, 303, each adapted to interact with a corresponding first deformation 302, 303 present on the facing wall 209 of a second block 20 circumferentially adjacent to the first block 20, for defining in the two circumferentially adjacent blocks 20 respective portions of mutual meshing.

In detail, in the embodiment shown in figures 3 and 4 the two first deformations 302, 303 are arranged axially substantially in a side-by-side relationship.

The two first deformations 302, 303 present on the same transverse wall 209 of a block 20 may further have opposite orientation along a circumferential direction. In other words, the transverse wall 209 of the block 20 may have a first deformation projecting from the wall 209 and a first deformation defining a recess in the wall 209.

Preferably, as shown in figure 2, the first deformations 302, 303 located in a substantially corresponding position of two pairs of circumferentially consecutive blocks 20 may have circumferentially the same orientation.

Each deformation 302, 303 comprises two undercut portions 304 (in the circumferential direction) which extend on opposite sides relative to a plane M perpendicular to the transverse wall 209 of the block 20.

More preferably, the two undercut portions 304 extend symmetrically in the axial direction relative to said plane M.

The undercut portions 304 extend radially preferably over the whole radial extension of the transverse sipe 8.

The undercut portions 304 hinder, when leaving the footprint area of the tyre, the opening of the transverse sipe 8 beyond a certain limit. Such a limit is reached when, during the opening of the transverse sipe 8, i.e. while the blocks 20 which are circumferentially adjacent move away from each other, the meshing portions provided on a transverse wall 209 of a block 20 contact the meshing portions provided on the facing transverse wall 209 of the circumferentially adjacent block 20, mutually hindering themselves and preventing a further opening of the transverse sipe 8.

As shown in figures 3 and 4, each undercut portion 304 is preferably defined by a substantially S-shaped surface portion T, so as to avoid the presence of edges which would unavoidably cause undesired stress concentrations, uneven wear problems and problems in extracting the sipe from the mould.

Still referring to figures 3 and 4, the two undercut portions 304 comprise two lateral walls 306 inclined at respective angles α1 and α2 relative to the main surface 109 of the sipe 8. Preferably, the angles α1 and α2 have a same width. More preferably, such a width is comprised between about 40° and 80°.

The lateral walls 306 are axially connected by a flat surface portion 17 substantially parallel to the transverse wall 209 of the block 20. In other words, moving from a radially outer end towards a radially inner end of the sipe 8, the distance d5 between the flat surface portion 17 and the transverse wall 209 of the block 20 remains substantially the same.

In other words, the flat surface portion 17 of the first deformation 302, 303 remains substantially at the same depth over the whole radial extension of the transverse sipe 8.

The first deformations 302, 303 preferably have a depth smaller than or equal to about 8 mm, measured at the radially outermost surface of the tread band.

At the radially outermost surface of the tread band the depth of the first deformation 302, 303 can be assimilated to the distance d5. Preferably, said depth of the first deformations 302, 303 is equal to or greater than 2 mm, even more preferably it is between about 2 mm and about 6 mm.

The first deformation 302, as well as the first deformation 303, is substantially puzzle-shaped.

Preferably, the first deformations 302, 303 extend radially over the whole depth of the transverse sipe 8.

The maximum width d4 of the first deformation 302, 303 is preferably comprised between about 5 mm and about 40 mm and varies moving from a radially outer end towards a radially inner end of the transverse sipe 8. The width d2 between the two lateral walls 306 at the wall 209 of the block has a value preferably comprised between about 30% and 90% of the maximum width d4.

In an embodiment, the maximum width d4 of the first deformation 302, 303 decreases moving radially from the radially outer end towards the radially inner end of the transverse sipe 8.

In at least one transverse sipe 8 on at least one of the opposite transverse walls 209 facing the transverse sipe 8, there is at least one second deformation 202, adapted to define in the circumferentially adjacent blocks 20 further respective portions of mutual constraint.

The second deformation defines a substantial deviation (e.g. a projection or a recess) relative to the substantially radial course of the wall of the block.

In detail, the second deformation 202 on a first block 20 defines a second constraint with a corresponding second deformation 202 on the facing wall of a second block 20 circumferentially adjacent to the first block 20. The second constraint acts at least in radial direction.

In other words, such a second constraint tends to hinder the mutual sliding in the radial direction of the facing transverse walls 209 of the first and second blocks 20.

Preferably, the second deformation 202 extends at least on a first deformation 302 or 303 so that the first 302, 303 and second 202 deformations are located at the same wall portion of the block 20.

Preferably, the second deformation 202 extends axially on both of the first deformations 302, 303 of the same transverse sipe 8. In the embodiment shown in figures 3 and 4, the second deformation 202 extends in a central portion on the wall of the block, with an axial extension smaller than 70% of the axial extension of the wall of the block.

Preferably, the second deformation 202 extends in a central portion on the wall of the block with an axial extension in the range between 20% and 60% of the axial extension of the transverse wall 209 of block 20.

In other words, the second deformation does not extend up to the axially outer edges of the transverse wall 209, remaining instead confined in a central portion thereof.

The second deformation 202 extends circumferentially on the transverse wall 209 of the central block 20 in a direction opposite to the rolling direction of the tyre, indicated by an arrow F in figures 2, 3, 4.

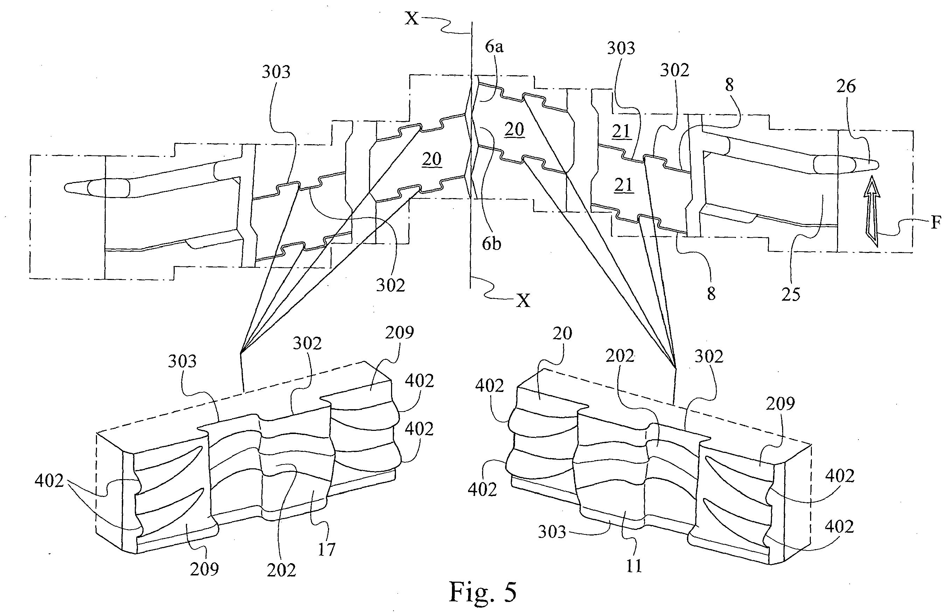

A plan view of a portion of the tread band of figure 2 is shown in figure 5. In particular, in the lower portion of the drawing two enlarged portions of blocks are shown, for highlighting that the second deformations 202 extend on the transverse wall 209 of the central block 20, projecting form the transverse wall 209 of a first block, in a direction opposite to the rolling direction, indicated by arrow F.

Considering two circumferentially adjacent central blocks 20 separated by a sipe 8, the second deformation 202 will be projecting form the transverse wall 209 of the central block 20 which first enters in the footprint area with reference to the rolling direction of the tyre, whereas the second deformation 202 formed on the opposite wall of the circumferentially adjacent central block 20 will define a recess in the transverse wall 209 of the central block 20 which enters as the second in the footprint area with reference to the rolling direction of the tyre.

The second deformation 202 extends axially so as to follow a course located at different radial depths.

The second deformation 202 may comprise at least one ridge 213, for example defined by at least two inclined portions 215 opposed to each other so as to form substantially a vertex 216.

Alternatively, the two inclined portions 215 could converge into a rounded end without departing from the scope of protection of the present invention.

The ridge 213 extends so as to follow a course located at different radial depths. In other words, moving axially from an axially outer end towards the remaining axially outer end of the same ridge 213, it is noted that the ridge 213, and particularly its vertex 216, is positioned at different radial depths.

In particular, as in the example shown in the figures, the ridge 213 is positioned at a radial depth that at the axially most central portion of the transverse wall 209 of the block 20, i.e. substantially at the centre line of the transverse wall 209, is smaller than at the axially outermost portions.

Preferably, in an axially central portion of the transverse wall 209 of the block 20, the ridge 213 of the second deformation 202 is located at a radially outer position relative to half the maximum radial depth h of the sipe 8.

Conveniently, in said axially central portion, the ridge 213 of the second deformation 202 may be located at a radial depth less than about 40% of the maximum depth h of the transverse sipe 8.

The choice of such a course for the second deformation 202, particularly of its ridge 213, improves the interaction between the opposite walls of adjacent central blocks 20 in the footprint area. In fact, on the one hand a greater meshing between the opposite walls of adjacent blocks 20 is provided in the region where this is more needed, i.e. the central region of the lateral wall of the block, and, on the other hand, predetermined regions where the synergistic effect with the first deformation 302, 303 makes the mutual meshing less necessary, or regions where excessively hindering the sliding of opposite walls would cause a decay of the tyre performances, are left freer.

Still referring to figures 3 and 4, it can be noted that in at least one transverse sipe 8, more precisely on at least one of the opposite transverse walls 209, facing the transverse sipe 8, there is at least one third deformation 402 adapted to define in the circumferentially adjacent blocks 20 further respective portions of mutual constraint.

The third deformation defines a substantial deviation (e.g. a projection or a recess) relative to the substantially radial course of the wall of the block.

In detail, the third deformation 402 on a first block 20 defines a second constraint with a corresponding third deformation 402 on the facing wall of a second block 20 circumferentially adjacent to the first block 20. The third constraint acts at least in radial direction.

In other words, such a third constraint, as the second one generated by the second deformation 202, tends to hinder the mutual sliding in the radial direction of the facing transverse walls 209 of the first and second blocks 20, but in a different region of the lateral wall of the block as compared to the region where the second deformation in present.

The third deformation 402 extends axially on the transverse wall 209 of the block. On this wall, the third deformation 402 appears as a deviation, substantially in circumferential direction, relative to the transverse wall 209 of the block.

In particular, the third deformations 402 projects, substantially in circumferential direction, from the transverse wall 209 of a block, as shown in figure 3, and defines a recess in the opposite transverse wall 209 of the adjacent central block 20, as shown in figure 4.

In detail, the third deformation 402 extends on the transverse wall 209 of the central block 20, projecting form the transverse wall 209 of a block and forming complementary a recess in the transverse wall 209 of the block circumferentially facing in a direction opposite to the rolling direction of the tyre, indicated by arrow F in figures 3, 4 and 5.

Considering two circumferentially adjacent central blocks 20 separated by a sipe 8, the third deformation 402 will be projecting form the transverse wall 209 of the central block 20 which first enters in the footprint area with reference to the rolling direction of the tyre, whereas the third deformation 402 formed on the opposite wall of the circumferentially adjacent central block 20 will define a recess in the transverse wall 209 of the central block 20 which enters as the second in the footprint area with reference to the rolling direction of the tyre.

The third deformation 402 has a depth altogether decreasing from an axial end of the transverse wall of the block towards a central region of the same wall.

Preferably, referring to the embodiment shown in figures 3 and 4, the depth of the third deformation 402 has a maximum value at the axially outer edge of the lateral wall 209 of the block and decreases moving axially away from said edge.

The depth of the third deformation tends to become substantially zero before the beginning of the first deformation 302, 303.

Preferably, the third deformation 402 extends axially on the transverse wall 209 of the block 20. In the embodiment shown in figures 3 and 4, the third deformation 402 extends in a lateral portion of the wall of the block with an axial extension smaller than 50% of the axial extension of the wall 209 of the block.

The third deformation 402 extends in a lateral portion of the wall of the block with an axial extension greater than 5% of the axial extension of the wall 209 of the block.

Preferably, the third deformation 402 has an axial extension of between 10% and 30% of the axial extension of the wall 209 of the block.

As shown in figures 3 and 4, the third deformation 402 extends in an axial direction on the transverse wall 209 of the block so that the third 402 and second 202 deformations do not have axially superimposed segments.

Preferably, for ensuring a good distribution and an effect of mutual constraint above all at the axially outer edges of transverse wall 209, two pairs of third deformations 402 are present on each opposite transverse wall of a block 20, 21.

Each pair has two third deformations 402 arranged in side-by-side relationship and spaced apart in radial direction.

On each opposite transverse wall of a block 20, 21, each pair of third deformations 402 is located opposite to the other pair relative to the central portion of the wall of the block. In detail, as shown in figures 3 and 4, each pair of third deformations is located opposite to the other pair relative to the first deformations 302, 303.

Preferably, the third deformations of each pair have the same shape and the same dimension.

For the sake of completeness, in figure 5 a preferred embodiment of an element 500 is shown, which may be arranged in a mould for creating in the tyre the transverse sipe 8, shown in figures 2 and 5, and is adapted to shape the walls 209 of adjacent blocks 20 as shown in figures 2, 3 and 5.

As known, in the manufacturing cycle of a tyre it is contemplated that, after a building process in which a green tyre is obtained, a moulding and curing process is carried out aimed at stabilizing the tyre structure according to a desired geometric conformation, usually characterised by a particular tread pattern.

During the moulding and curing operation, the green tyre is pushed against the inner walls of the mould cavity and stabilized in the geometric configuration imparted to it, further to the cross-linking.

In this step, the green tyre interacts also with the element 500 for creating in the tread band 2 of the tyre the transverse sipe 8.

Coming again to the tread band 2, as far as the shoulder portions L2, L3 are concerned, in the embodiment shown in figure 2 the shoulder portion L2 has a row 13 of shoulder blocks comprising a plurality of shoulder blocks 22 separated from one another by shoulder transverse grooves 23.

Similarly, in the embodiment shown in figure 2 the shoulder portion L3 has a row 14 of shoulder blocks comprising a plurality of shoulder blocks 25 separated from each other by shoulder transverse grooves 26.

The shoulder blocks 27 of row 14 are preferably arranged circumferentially staggered relative to the shoulder blocks 22 of row 13.

In the tread pattern of figure 2, the rows 13, respectively 14, of blocks are substantially identical, leaving out the inclination of the shoulder transverse grooves 23, respectively 26. For the sake of a simple presentation and of reading convenience, in the rest of the present description the circumferential row 13 of shoulder blocks 23 will be described, being understood that the same holds also for the circumferential row 14 of shoulder blocks 25 of the lateral portion L3 of the tread band 2.

The shoulder transverse grooves 23 have substantially a constant width, and even more preferably a width of between 14 mm and 28 mm, for example equal to 22 mm.

The shoulder transverse grooves 23 extend along an inclined direction relative to the equatorial plane X-X, adapted to form an angle α3 with the equatorial plane X-X.

Preferably, the transverse grooves 23 form with the equatorial plane X-X an angle α3 smaller than 90°, preferably greater than 15°, for example equal to about 75°.

Furthermore, the shoulder transverse grooves 23 preferably have a maximum depth greater than 10 mm, preferably smaller than 25 mm, for example equal to 18 mm.

The shoulder transverse grooves 23 have a depth reduction at their axially most central portion so as to define a double-step course.

Preferably, at the depth reduction the shoulder transverse grooves 23 have a depth smaller than 10 mm.

The choice of keeping the depth of the transverse grooves 23 small in the axially most central portion allows a greater strength against lateral and torsional stresses to be ensured.

In order to increase traction on snow-covered roads and drainage on wet roads, the shoulder blocks 22, 25 may be provided with sipes 30, as in the case shown in figures 1-3.

The sipes 30 may have a depth of between 1 and 5 mm, for example equal to 2 mm, and a width of between 0 and 2 mm.

The present invention has been described with reference to some embodiments thereof. Many modifications can be made in the embodiments described in detail, still remaining within the scope of protection of the invention, defined by the following claims.

## Claims

1. Tyre (1) having a tread (2) comprising a central annular portion (L1) across an equatorial plane (X-X) and two shoulder annular portions (L2, L3), located on axially opposite sides relative to the central annular portion (L1), the central annular portion being separated from each shoulder annular portion by a respective first circumferential groove (3, 4), wherein the central annular portion (L1) comprises a plurality of blocks (20, 21), arranged in at least one circumferential row comprised between two circumferential grooves (3, 4, 5, 6, 7), and at least one sipe (8) adapted to separate two circumferentially consecutive blocks (20, 21); each block being circumferentially delimited, by means of two consecutive sipes (8), by two opposite walls extending with a substantially transverse course relative to the equatorial plane (X-X) of the tyre (1) and with a substantially radial course from the bottom of the sipe (8) to the radially outermost surface of the block (20, 21); on at least one of the opposite transverse walls of a first block (20, 21) being present at least one first deformation (302; 303);
said at least one first deformation (302, 303) defining a first constraint together with a corresponding first deformation (302, 303) present on the facing wall of a second block (20, 21) circumferentially adjacent to said first block (20, 21); said first constraint acting at least in a circumferential direction;
- at least one second deformation (202) is present on at least one of the opposite transverse walls of said first block (20, 21);
- said second deformation (202) defines a second constraint together with a corresponding second deformation (202) present on the facing wall of said second block (20, 21) circumferentially adjacent to said first block (20, 21), said second constraint acting at least in a radial direction;
- said second deformation (202) extends at least on the said first deformation (302; 303) so that said first and second deformations are located at the same wall portion of the block;
- said second deformation (202) extends axially so as to have a course located at different radial depths of the sipe (8);
**characterised in that**
- said second deformation extends in a central portion on the transverse wall of the first and/or second block with an axial extension smaller than 70% of the axial extension of the transverse wall of the first and/or second block;
- said second deformation circumferentially extends on said first deformation in a direction opposite to the rolling direction of the tyre;
and **in that**
- on at least one of the opposite transverse walls of said first block (20, 21) at least one third deformation (402) is present having a depth altogether decreasing from an axial end of the transverse wall (209) of the first block towards a central region of said transverse wall and wherein said third deformation has maximum radial extension smaller than 30% of the maximum depth (h) of the sipe;
- said third deformation (402) defines a third constraint together with a corresponding third deformation (402) present on the facing wall of said second block (20, 21) circumferentially adjacent to said first block (20, 21), said third constraint acting at least in a radial direction.

2. Tyre (1) according to claim 1, wherein said second deformation (202) has an axial extension greater than 10% of the axial extension of the wall (209) of the block.

3. Tyre (1) according to claim 1, wherein said second deformation (202) has a width smaller than 30% of the maximum depth (h) of the sipe (8).

4. Tyre (1) according to claim 1, wherein the third deformation (402) has an axial extension smaller than 50% of the axial extension of the wall of the first and/or second block.

5. Tyre (1) according to claim 1, wherein the third deformation (402) has an axial extension greater than 5% of the axial extension of the wall (209) of the first and/or second block.

6. Tyre (1) according to any one of claims 1 to 5, wherein said third deformation (402) circumferentially extends on the transverse wall (209) of the first and/or second block in a direction opposite to the rolling direction of the tyre.

7. Tyre (1) according to any one of claims 1 to 6, wherein the third deformation (402) extends in an axial direction on the transverse wall (20) of the first and/or second block so that the third and second deformations do not have axially superimposed segments.

8. Tyre (1) according to any one of claims 1 to 7, wherein two pairs of third deformations (402) are present on each opposite transverse wall of the first and/or second block (20, 21).

9. Tyre (1) according to claim 8, wherein each pair of third deformations (402) is located opposite to the other pair relative to the central portion of the transverse wall (209) of the first and/or second block.

10. Tyre (1) according to claim 8 or 9, wherein each pair of third deformations (402) has two substantially equal third deformations (402) located at different radial depths of the transverse portion of the wall (209) of the first and/or second block (20, 21) on which they lie.

11. Tyre (1) according to any one of the previous claims 1 to 10, wherein the ridge (213) of the second deformation (202) is located at a radial depth of between 30% and 70% of the maximum depth (h) of the sipe (8).

12. Tyre (1) according to claim 11, wherein the ridge (213) of the second deformation (202) is defined by at least two inclined portions (214; 215) opposed to each other so as to form substantially a corner (216).

13. Tyre (1) according to claim 11 or 12, wherein the second deformation (202) comprises a ridge (213) located at a radially outer position relative to half the maximum radial depth of the sipe (8).

14. Tyre (1) according to any one of the previous claims 1 to 13, wherein at least one first deformation (302, 303) comprises at least two undercut portions (304) in a circumferential direction, which extend on opposite sides relative to a plane perpendicular to the transverse wall of the block (20, 21).

15. Tyre (1) according to claim 14, wherein said at least two undercut portions (304) radially extend over the whole depth of the transverse sipe (8).

16. Tyre (1) according to any one of the previous claims 1 to 15, wherein each transverse wall of the block (20, 21) of said at least one circumferential row has two first deformations (302, 303) axially in side-by-side relationship.

17. Tyre (1) according to claim 14, wherein said two first deformations (302, 303) present on a transverse wall of the block have mutually opposite orientations along a circumferential direction.

18. Tyre (1) according to any one of the previous claims, wherein the first deformations (302, 303) located in a substantially corresponding position of two circumferentially consecutive sipes (8) circumferentially have a same orientation.

19. Tyre (1) according to any one of the previous claims, wherein said at least one first deformation (302, 303) has a depth measured on the radially outer surface of the tread band smaller than or equal to about 8 mm.

20. Tread band for a tyre for vehicle wheels, comprising a central annular portion (L1) across an equatorial plane (X-X) and two shoulder annular portions (L2, L3), located on axially opposite sides relative to the central annular portion (L1), the central annular portion being separated from each shoulder annular portion by a respective first circumferential groove (3, 4), wherein the central annular portion (L1) comprises a plurality of blocks (20, 21), arranged in at least one circumferential row comprised between two circumferential grooves (3, 4, 5, 6, 7), and at least one sipe (8) adapted to separate two circumferentially consecutive blocks (20, 21); each block being circumferentially delimited, by means of two consecutive sipes (8), by two opposite walls extending with a substantially transverse course relative to the equatorial plane (X-X) of the tyre (1) and with a substantially radial course from the bottom of the sipe (8) to the radially outermost surface of the block (20, 21); on at least one of the opposite transverse walls of a first block (20, 21) being present at least one first deformation (302; 303);
said at least one first deformation (302, 303) defining a first constraint together with a corresponding first deformation (302, 303) present on the facing wall of a second block (20, 21) circumferentially adjacent to said first block (20, 21); said first constraint acting at least in a circumferential direction;
- at least one second deformation (202) is present on at least one of the opposite transverse walls of said first block (20, 21);
- said second deformation (202) defines a second constraint together with a corresponding second deformation (202) present on the facing wall of said second block (20, 21) circumferentially adjacent to said first block (20, 21), said second constraint acting at least in a radial direction;
- said second deformation (202) extends at least on the said first deformation (302; 303) so that said first and second deformations are located at the same wall portion of the block;
- said second deformation (202) extends axially so as to have a course located at different radial depths of the sipe (8);
**characterised in that**
- said second deformation extends in a central portion on the transverse wall of the first and/or second block with an axial extension smaller than 70% of the axial extension of the transverse wall of the first and/or second block;
- said second deformation circumferentially extends on said first deformation in a direction opposite to the rolling direction of the tyre;
and **in that**
- on at least one of the opposite transverse walls of said first block (20, 21) at least one third deformation (402) is present having a depth altogether decreasing from an axial end of the transverse wall (209) of the first block towards a central region of said transverse wall and wherein said third deformation has maximum radial extension smaller than 30% of the maximum depth (h) of the sipe;
- said third deformation (402) defines a third constraint together with a corresponding third deformation (402) present on the facing wall of said second block (20, 21) circumferentially adjacent to said first block (20, 21), said third constraint acting at least in a radial direction.

21. Method for increasing the performance of a tyre, said method including:
making a tyre having a tread comprising:
a central annular portion (L1) across an equatorial plane (X-X) and two shoulder annular portions (L2, L3), located on axially opposite sides relative to the central annular portion (L1), the central annular portion being separated from each shoulder annular portion by a respective first circumferential groove (3, 4), wherein the central annular portion (L1) comprises a plurality of blocks (20, 21), arranged in at least one circumferential row comprised between two circumferential grooves (3, 4, 5, 6, 7), and at least one sipe (8) adapted to separate two circumferentially consecutive blocks (20, 21); each block being circumferentially delimited, by means of two consecutive sipes (8), by two opposite walls extending with a substantially transverse course relative to the equatorial plane (X-X) of the tyre (1) and with a substantially radial course from the bottom of the sipe (8) to the radially outermost surface of the block (20, 21); on at least one of the opposite transverse walls of a first block (20, 21) being present at least one first deformation (302; 303);
said at least one first deformation (302, 303) defining a first constraint together with a corresponding first deformation (302, 303) present on the facing wall of a second block (20, 21) circumferentially adjacent to said first block (20, 21); said first constraint acting at least in a circumferential direction;
- at least one second deformation (202) is present on at least one of the opposite transverse walls of said first block (20, 21);
- said second deformation (202) defines a second constraint together with a corresponding second deformation (202) present on the facing wall of said second block (20, 21) circumferentially adjacent to said first block (20, 21), said second constraint acting at least in a radial direction;
- said second deformation (202) extends at least on the said first deformation (302; 303) so that said first and second deformations are located at the same wall portion of the block;
- said second deformation (202) extends axially so as to have a course located at different radial depths of the sipe (8);
**characterised in that**
- said second deformation extends in a central portion on the transverse wall of the first and/or second block with an axial extension smaller than 70% of the axial extension of the transverse wall of the first and/or second block;
- said second deformation circumferentially extends on said first deformation in a direction opposite to the rolling direction of the tyre;
and **in that**
- on at least one of the opposite transverse walls of said first block (20, 21) at least one third deformation (402) is present having a depth altogether decreasing from an axial end of the transverse wall (209) of the first block towards a central region of said transverse wall and wherein said third deformation has maximum radial extension smaller than 30% of the maximum depth (h) of the sipe;
- said third deformation (402) defines a third constraint together with a corresponding third deformation (402) present on the facing wall of said second block (20, 21) circumferentially adjacent to said first block (20, 21), said third constraint acting at least in a radial direction.

## Patentansprüche

1. Reifen (1) mit einer Lauffläche (2) umfassend einen zentralen ringförmigen Abschnitt (L1) quer über eine Äquatorialebene (X-X) und zwei ringförmige Schulterabschnitte (L2, L3), die sich auf axial gegenüberliegenden Seiten in Bezug auf den zentralen ringförmigen Abschnitt (L1) befinden, wobei der zentrale ringförmige Abschnitt von jedem ringförmigen Schulterabschnitt durch eine jeweilige erste umlaufende Nut (3, 4) getrennt ist, wobei der zentrale ringförmige Abschnitt (L1) eine Vielzahl von Blöcken (20, 21) umfasst, die in zumindest einer umlaufenden Reihe angeordnet sind, die zwischen zwei umlaufenden Nuten (3, 4, 5, 6, 7) liegt, und zumindest eine Lamelle (8), die dazu geeignet ist, zwei in Umfangsrichtung aufeinander folgende Blöcke (20, 21) zu trennen, wobei jeder Block in Umfangsrichtung mittels zweier aufeinander folgender Lamellen (8), durch zwei gegenüberliegende Wände begrenzt ist, die sich mit einem im Wesentlichen querverlaufenden Verlauf in Bezug auf die Äquatorialebene (X-X) des Reifens (1) und mit einem im Wesentlichen radialen Verlauf von dem Boden der Lamelle (8) zu der radial äußersten Oberfläche des Blocks (20, 21) erstrecken; wobei an zumindest einer der gegenüberliegenden querverlaufenden Wände eines ersten Blocks (20, 21) zumindest eine erste Verformung (302; 303) vorhanden ist;
wobei die zumindest eine erste Verformung (302, 303) eine erste Begrenzung mit einer entsprechenden ersten Verformung (302, 303) definiert, die an der zugewandten Wand eines zweiten Blocks (20, 21) vorliegt, der zu dem ersten Block (20, 21) in Umfangsrichtung benachbart ist; wobei die erste Begrenzung zumindest in einer Umfangsrichtung wirkt;
- zumindest eine zweite Verformung (202) an zumindest einer der gegenüberliegenden querverlaufenden Wände des ersten Blocks (20, 21) vorhanden ist;
- wobei die zweite Verformung (202) eine zweite Begrenzung mit einer entsprechenden zweiten Verformung (202) definiert, die an der zugewandten Wand eines zweiten Blocks (20, 21) vorliegt, der zu dem ersten Block (20, 21) in Umfangsrichtung benachbart ist, wobei die zweite Begrenzung zumindest in einer Radialrichtung wirkt;
- wobei die zweite Verformung (202) sich zumindest an der ersten Verformung (302; 303) erstreckt, so dass die erste und zweite Verformung sich an demselben Wandabschnitt des Blocks befinden;
- die zweite Verformung (202) sich axial so erstreckt, dass sie einem Verlauf folgt, der sich an unterschiedlichen radialen Tiefen der Lamelle (8) befindet;
**dadurch gekennzeichnet, dass**
- die zweite Verformung sich in einem zentralen Abschnitt an der querverlaufenden Wand des ersten und/oder zweiten Blocks erstreckt, mit einer axialen Erstreckung von weniger als 70 % der axialen Erstreckung der querverlaufenden Wand des ersten und/oder zweiten Blocks;
- wobei die Verformung sich in Umfangsrichtung an der ersten Verformung in einer der Rollrichtung des Reifens entgegengesetzten Richtung erstreckt;
und dass
- an zumindest einer der gegenüberliegenden querverlaufenden Wände des ersten Blocks (20, 21) zumindest eine dritte Verformung (402) vorhanden ist, die eine Tiefe aufweist, die insgesamt von einem axialen Ende der querverlaufenden Wand (209) des ersten Blocks zu einem Zentralbereich der querverlaufenden Wand abnimmt, und wobei die dritte Verformung eine maximale radiale Erstreckung von weniger als 30 % der maximalen Tiefe (h) der Lamelle aufweist;
wobei die dritte Verformung (402) eine dritte Begrenzung mit einer entsprechenden dritten Verformung (402) definiert, die an der zugewandten Wand des zweiten Blocks (20, 21) vorliegt, der zu dem ersten Block (20, 21) in Umfangsrichtung benachbart ist, wobei die dritte Begrenzung zumindest in einer Radialrichtung wirkt.

2. Reifen (1) nach Anspruch 1, wobei die zweite Verformung (202) eine axiale Erstreckung von mehr als 10 % der axialen Erstreckung der Wand (209) des Blocks aufweist.

3. Reifen (1) nach Anspruch 1, wobei die zweite Verformung (202) eine Breite aufweist, die geringer als 30 % der maximalen Tiefe (h) der Lamelle (8) ist.

4. Reifen (1) nach Anspruch 1, wobei die dritte Verformung (402) eine axiale Erstreckung von weniger als 50 % der axialen Erstreckung der Wand des ersten und/oder zweiten Blocks aufweist.

5. Reifen (1) nach Anspruch 1, wobei die dritte Verformung (402) eine axiale Erstreckung von weniger als 5 % der axialen Erstreckung der Wand (209) des ersten und/oder zweiten Blocks aufweist.

6. Reifen (1) nach einem der Ansprüche 1 bis 5, wobei die dritte Verformung (402) sich in Umfangsrichtung an der querverlaufenden Wand (209) des ersten und/oder zweiten Blocks in einer der Rollrichtung des Reifens entgegengesetzten Richtung erstreckt.

7. Reifen (1) nach einem der Ansprüche 1 bis 6, wobei die dritte Verformung (402) sich in einer axialen Richtung an der querverlaufenden Wand (20) des ersten und/oder zweiten Blocks erstreckt, so dass die dritten und zweiten Verformungen keine axial überlagerten Segmente aufweisen.

8. Reifen (1) nach einem der Ansprüche 1 bis 7, wobei zwei Paare von dritten Verformungen (402) an jeder gegenüberliegenden querverlaufenden Wand des ersten und/oder zweiten Blocks (20, 21) vorliegen.

9. Reifen (1) nach Anspruch 8, wobei jedes Paar von dritten Verformungen (402) sich in Bezug auf den Zentralabschnitt der querverlaufenden Wand (209) des ersten und/oder zweiten Blocks dem anderen Paar gegenüberliegend befindet.

10. Reifen (1) nach Anspruch 8 oder 9, wobei jedes Paar von dritten Verformungen (402) zwei im Wesentlichen gleiche dritte Verformungen (402) aufweist, die sich an unterschiedlichen radialen Tiefen des querverlaufenden Abschnitts der Wand (209) des ersten und/oder zweiten Blocks (20, 21), an dem sie liegen, befinden.

11. Reifen (1) nach einem der vorhergehenden Ansprüche 1 bis 10, wobei der Kamm (213) der zweiten Verformung (202) sich an einer radialen Tiefe von zwischen 30 % und 70 % der maximalen Tiefe (h) der Lamelle (8) befindet.

12. Reifen (1) nach Anspruch 11, wobei der Kamm (213) der zweiten Verformung (202) durch zumindest zwei schräge Abschnitte (214; 215) definiert wird, die einander so entgegengesetzt sind, dass sie im Wesentlichen eine Ecke (216) bilden.

13. Reifen (1) nach Anspruch 11 oder 12, wobei die zweite Verformung (202) einen Kamm (213) umfasst, der sich an einer radial äußeren Position relativ zur Hälfte der maximalen radialen Tiefe der Lamelle (8) befindet.

14. Reifen (1) nach einem der vorhergehenden Ansprüche 1 bis 13, wobei zumindest eine erste Verformung (302, 303) zumindest zwei Unterschneidungsabschnitte (304) in einer Umfangsrichtung aufweist, die sich an gegenüberliegenden Seiten in Bezug auf eine Ebene senkrecht auf die querverlaufende Wand des Blocks (20, 21) erstrecken.

15. Reifen (1) nach Anspruch 14, wobei die zumindest zwei Unterschneidungsabschnitte (304) sich radial über die gesamte Tiefe der querverlaufenden Lamelle (8) erstrecken.

16. Reifen (1) nach einem der vorhergehenden Ansprüche 1 bis 15, wobei jede querverlaufende Wand des Blocks (20, 21) der zumindest einen umlaufenden Reihe zwei erste Verformungen (302, 303) axial in einer Beziehung Seite an Seite aufweist.

17. Reifen (1) nach Anspruch 14, wobei die zwei ersten Verformungen (302, 303), die an einer querverlaufenden Wand des Blocks vorliegen, entlang einer Umfangsrichtung einander entgegengesetzte Orientierungen aufweisen.

18. Reifen (1) nach einem der vorhergehenden Ansprüche, wobei die ersten Verformungen (302, 303), die sich in einer im Wesentlichen entsprechenden Position zweier in Umfangsrichtung aufeinander folgender Lamellen (8) befinden, in Umfangsrichtung die gleiche Orientierung aufweisen können.

19. Reifen (1) nach einem der vorhergehenden Ansprüche, wobei die zumindest eine erste Verformung (302, 303) eine an der radial äußeren Fläche des Laufflächenrings gemessene Tiefer von weniger als oder gleich etwa 8 mm aufweist.

20. Laufflächenring für Reifen für Fahrzeugräder, umfassend einen zentralen ringförmigen Abschnitt (L1) quer über eine Äquatorialebene (X-X) und zwei ringförmige Schulterabschnitte (L2, L3), die sich auf axial gegenüberliegenden Seiten in Bezug auf den zentralen ringförmigen Abschnitt (L1) befinden, wobei der zentrale ringförmige Abschnitt von jedem ringförmigen Schulterabschnitt durch eine jeweilige erste umlaufende Nut (3, 4) getrennt ist, wobei der zentrale ringförmige Abschnitt (L1) eine Vielzahl von Blöcken (20, 21) umfasst, die in zumindest einer umlaufenden Reihe angeordnet sind, die zwischen zwei umlaufenden Nuten (3, 4, 5, 6, 7) liegt, und zumindest eine Lamelle (8), die dazu geeignet ist, zwei in Umfangsrichtung aufeinander folgende Blöcke (20, 21) zu trennen; wobei jeder Block in Umfangsrichtung mittels zweier aufeinander folgender Lamellen (8) begrenzt ist, durch zwei gegenüberliegende Wände, die sich mit einem im Wesentlichen querverlaufenden Verlauf in Bezug auf die Äquatorialebene (X-X) des Reifens (1) und mit einem im Wesentlichen radialen Verlauf von dem Boden der Lamelle (8) zu der radial äußersten Oberfläche des Blocks (20, 21) erstrecken; wobei an zumindest einer der gegenüberliegenden querverlaufenden Wände eines ersten Blocks (20, 21) zumindest eine erste Verformung (302; 303) vorhanden ist;
wobei die zumindest eine erste Verformung (302, 303) eine erste Begrenzung mit einer entsprechenden ersten Verformung (302, 303) definiert, die an der zugewandten Wand eines zweiten Blocks (20, 21) vorliegt, der zu dem ersten Block (20, 21) in Umfangsrichtung benachbart ist; wobei die erste Begrenzung zumindest in einer Umfangsrichtung wirkt;
- zumindest eine zweite Verformung (202) an zumindest einer der gegenüberliegenden querverlaufenden Wände des ersten Blocks (20, 21) vorhanden ist;
- wobei die zweite Verformung (202) eine zweite Begrenzung mit einer entsprechenden zweiten Verformung (202) definiert, die an der zugewandten Wand eines zweiten Blocks (20, 2) vorliegt, der zu dem ersten Block (20, 21) in Umfangsrichtung benachbart ist, wobei die zweite Begrenzung zumindest in einer Radialrichtung wirkt;
- wobei die zweite Verformung (202) sich zumindest an der ersten Verformung (302; 303) erstreckt, so dass die erste und zweite Verformung sich an demselben Wandabschnitt des Blocks befinden;
- die zweite Verformung (202) sich axial so erstreckt, dass sie einem Verlauf folgt, der sich an unterschiedlichen radialen Tiefen der Lamelle (8) befindet;
**dadurch gekennzeichnet, dass**
- die zweite Verformung sich in einem zentralen Abschnitt an der querverlaufenden Wand des ersten und/oder zweiten Blocks erstreckt, mit einer axialen Erstreckung von weniger als 70 % der axialen Erstreckung der querverlaufenden Wand des ersten und/oder zweiten Blocks;
- wobei die Verformung sich in Umfangsrichtung an der ersten Verformung in einer der Rollrichtung des Reifens entgegengesetzten Richtung erstreckt;
und dass
- an zumindest einer der gegenüberliegenden querverlaufenden Wände des ersten Blocks (20, 21) zumindest eine dritte Verformung (402) vorhanden ist, die eine Tiefe aufweist, die insgesamt von einem axialen Ende der querverlaufenden Wand (209) des ersten Blocks zu einem Zentralbereich der querverlaufenden Wand abnimmt, und wobei die dritte Verformung eine maximale radiale Erstreckung von weniger als 30 % der maximalen Tiefe (h) der Lamelle aufweist;
- wobei die dritte Verformung (402) eine dritte Begrenzung mit einer entsprechenden dritten Verformung (402) definiert, die an der zugewandten Wand des zweiten Blocks (20, 21) vorliegt, der zu dem ersten Block (20, 21) in Umfangsrichtung benachbart ist, wobei die dritte Begrenzung zumindest in einer Radialrichtung wirkt.

21. Verfahren zur Verbesserung der Leistung eines Reifens, wobei das Verfahren umfasst:
Herstellen eines Reifens mit einer Lauffläche, umfassend:
einen zentralen ringförmigen Abschnitt (L1) quer über eine Äquatorialebene (X-X) und zwei ringförmige Schulterabschnitte (L2, L3), die sich auf axial gegenüberliegenden Seiten in Bezug auf den zentralen ringförmigen Abschnitt (L1) befinden, wobei der zentrale ringförmige Abschnitt von jedem ringförmigen Schulterabschnitt durch eine jeweilige erste umlaufende Nut (3, 4) getrennt ist, wobei der zentrale ringförmige Abschnitt (L1) eine Vielzahl von Blöcken (20, 21) umfasst, die in zumindest einer umlaufenden Reihe angeordnet sind, die zwischen zwei umlaufenden Nuten (3, 4, 5, 6, 7) liegt, und zumindest eine Lamelle (8), die dazu geeignet ist, zwei in Umfangsrichtung aufeinander folgende Blöcke (20, 21) zu trennen; wobei jeder Block in Umfangsrichtung mittels zweier aufeinander folgender Lamellen (8) begrenzt ist, durch zwei gegenüberliegende Wände, die sich mit einem im Wesentlichen querverlaufenden Verlauf in Bezug auf die Äquatorialebene (X-X) des Reifens (1) und mit einem im Wesentlichen radialen Verlauf von dem Boden der Lamelle (8) zu der radial äußersten Oberfläche des Blocks (20, 21) erstrecken; wobei an zumindest einer der gegenüberliegenden querverlaufenden Wände eines ersten Blocks (20, 21) zumindest eine erste Verformung (302; 303) vorhanden ist;
wobei die zumindest eine erste Verformung (302, 303) eine erste Begrenzung mit einer entsprechenden ersten Verformung (302, 303) definiert, die an der zugewandten Wand eines zweiten Blocks (20, 21) vorliegt, der zu dem ersten Block (20, 21) in Umfangsrichtung benachbart ist; wobei die erste Begrenzung zumindest in einer Umfangsrichtung wirkt;
- zumindest eine zweite Verformung (202) an zumindest einer der gegenüberliegenden querverlaufenden Wände des ersten Blocks (20, 21) vorhanden ist;
- wobei die zweite Verformung (202) eine zweite Begrenzung mit einer entsprechenden zweiten Verformung (202) definiert, die an der zugewandten Wand eines zweiten Blocks (20, 21) vorliegt, der zu dem ersten Block (20, 21) in Umfangsrichtung benachbart ist, wobei die zweite Begrenzung zumindest in einer Radialrichtung wirkt;
- wobei die zweite Verformung (202) sich zumindest an der ersten Verformung (302; 303) erstreckt, so dass die erste und zweite Verformung sich an demselben Wandabschnitt des Blocks befinden;
- die zweite Verformung (202) sich axial so erstreckt, dass sie einem Verlauf folgt, der sich an unterschiedlichen radialen Tiefen der Lamelle (8) befindet;
**dadurch gekennzeichnet, dass**
- die zweite Verformung sich in einem zentralen Abschnitt an der querverlaufenden Wand des ersten und/oder zweiten Blocks erstreckt, mit einer axialen Erstreckung von weniger als 70 % der axialen Erstreckung der querverlaufenden Wand des ersten und/oder zweiten Blocks;
- wobei die Verformung sich in Umfangsrichtung an der ersten Verformung in einer der Rollrichtung des Reifens entgegengesetzten Richtung erstreckt;
und dass
- an zumindest einer der gegenüberliegenden querverlaufenden Wände des ersten Blocks (20, 21) zumindest eine dritte Verformung (402) vorhanden ist, die eine Tiefe aufweist, die insgesamt von einem axialen Ende der querverlaufenden Wand (209) des ersten Blocks zu einem Zentralbereich der querverlaufenden Wand abnimmt, und wobei die dritte Verformung eine maximale radiale Erstreckung von weniger als 30 % der maximalen Tiefe (h) der Lamelle aufweist;
- wobei die dritte Verformung (402) eine dritte Begrenzung mit einer entsprechenden dritten Verformung (402) definiert, die an der zugewandten Wand des zweiten Blocks (20, 21) vorliegt, der zu dem ersten Block (20, 21) in Umfangsrichtung benachbart ist, wobei die dritte Begrenzung zumindest in einer Radialrichtung wirkt.

## Revendications

1. Pneu (1) ayant une bande de roulement (2) comprenant une partie annulaire centrale (L1) à travers un plan équatorial (X-X) et deux parties annulaires d'épaulement (L2, L3), situées sur des côtés axialement opposés par rapport à la partie annulaire centrale (L1), la partie annulaire centrale étant séparée de chaque partie annulaire d'épaulement par une première rainure circonférentielle respective (3, 4), où la partie annulaire centrale (L1) comprend une pluralité de blocs (20, 21), agencés en au moins une rangée circonférentielle comprise entre deux rainures circonférentielles (3, 4, 5, 6, 7) et au moins une lamelle (8) adaptée pour séparer deux blocs consécutifs sur la circonférence (20, 21) ; chaque bloc étant délimité sur la circonférence, au moyen de deux lamelles consécutives (8), par deux parois opposées s'étendant selon une trajectoire essentiellement transversale par rapport au plan équatorial (X-X) du pneu (1) et selon une trajectoire essentiellement radiale à partir de la partie inférieure de la lamelle (8) à la surface radialement la plus externe du bloc (20, 21) ; au moins une première déformation (302 ; 303) est présente sur au moins l'une des parois transversales opposées d'un premier bloc (20, 21) ;
ladite au moins une première déformation (302, 303) définissant une première contrainte conjointement avec une première déformation correspondante (302, 303) présente sur la paroi frontale d'un deuxième bloc (20, 21) adjacent sur la circonférence audit premier bloc (20, 21) ; ladite première contrainte agissant au moins dans une direction circonférentielle ;
- au moins une deuxième déformation (202) est présente sur au moins l'une des parois transversales opposées dudit premier bloc (20, 21) ;
- ladite deuxième déformation (202) définit une deuxième contrainte conjointement avec une deuxième déformation correspondante (202) présente sur la paroi frontale dudit deuxième bloc (20, 21) adjacent sur la circonférence audit premier bloc (20, 21), ladite deuxième contrainte agissant au moins dans une direction radiale ;
- ladite deuxième déformation (202) s'étend au moins sur ladite première déformation (302 ; 303) de sorte que lesdites première et deuxième déformations soient situées au niveau de la même partie de paroi du bloc ;
- ladite deuxième déformation (202) s'étend axialement de manière à avoir une trajectoire située à différentes profondeurs radiales de la lamelle (8) ;
**caractérisé en ce que**
- ladite deuxième déformation s'étend dans une partie centrale sur la paroi transversale du premier et/ou du deuxième bloc(s) avec une extension axiale inférieure à 70% l'extension axiale de la paroi transversale du premier et/ou du deuxième bloc(s) ;
- ladite deuxième déformation s'étend de manière circonférentielle sur ladite première déformation dans une direction opposée à la direction de roulement du pneu ;
et **en ce que**
- sur au moins l'une des parois transversales opposées dudit premier bloc (20, 21) au moins une troisième déformation (402) est présente en ayant une profondeur diminuant en tout d'une extrémité axiale de la paroi transversale (209) du premier bloc vers une région centrale de ladite paroi transversale et où ladite troisième déformation a une extension radiale maximale inférieure à 30% de la profondeur maximale (h) de la lamelle ;
- ladite troisième déformation (402) définit une troisième contrainte conjointement avec une troisième déformation correspondante (402) présente sur la paroi frontale dudit deuxième bloc (20, 21) adjacent sur la circonférence audit premier bloc (20, 21), ladite troisième contrainte agissant au moins dans une direction radiale.

2. Pneu (1) selon la revendication 1, dans lequel ladite deuxième déformation (202) a une extension axiale supérieure à 10% de l'extension axiale de la paroi (209) du bloc.

3. Pneu (1) selon la revendication 1, dans lequel ladite deuxième déformation (202) a une largeur inférieure à 30% de la profondeur maximale (h) de la lamelle (8).

4. Pneu (1) selon la revendication 1, dans lequel la troisième déformation (402) a une extension axiale inférieure à 50% de l'extension axiale de la paroi du premier et/ou du deuxième bloc(s).

5. Pneu (1) selon la revendication 1, dans lequel la troisième déformation (402) a une extension axiale supérieure à 5% de l'extension axiale de la paroi (209) du premier et/ou du deuxième bloc(s).

6. Pneu (1) selon l'une quelconque des revendications 1 à 5, dans lequel ladite troisième déformation (402) s'étend de manière circonférentielle sur la paroi transversale (209) du premier et/ou du deuxième bloc(s) dans une direction opposée à la direction de roulement du pneu.

7. Pneu (1) selon l'une quelconque des revendications 1 à 6, dans lequel la troisième déformation (402) s'étend dans une direction axiale sur la paroi transversale (20) du premier et/ou du deuxième bloc(s) de sorte que les troisième et deuxième déformations n'aient pas de segments superposés axialement.

8. Pneu (1) selon l'une quelconque des revendications 1 à 7, dans lequel deux paires de troisièmes déformations (402) sont présentes sur chaque paroi transversale opposée du premier et/ou du deuxième bloc(s) (20, 21).

9. Pneu (1) selon la revendication 8, dans lequel chaque paire de troisièmes déformations (402) est située de manière opposée à l'autre paire par rapport à la partie centrale de la paroi transversale (209) du premier et/ou du deuxième bloc(s).

10. Pneu (1) selon la revendication 8 ou 9, dans lequel chaque paire de troisièmes déformations (402) a deux troisièmes déformations essentiellement égales (402) situées à différentes profondeurs radiales de la partie transversale de la paroi (209) du premier et/ou du deuxième bloc(s) (20, 21) sur lequel/lesquels elles reposent.

11. Pneu (1) selon l'une quelconque des revendications précédentes 1 à 10, dans lequel l'arête (213) de la deuxième déformation (202) est située à une profondeur radiale comprise entre 30% et 70% de la profondeur maximale (h) de la lamelle (8).

12. Pneu (1) selon la revendication 11, dans lequel l'arête (213) de la deuxième déformation (202) est définie par au moins deux parties inclinées (214 ; 215) opposées l'une à l'autre de manière à former essentiellement un coin (216) .

13. Pneu (1) selon la revendication 11 ou 12, dans lequel la deuxième déformation (202) comprend une arête (213) située à une position radialement externe par rapport à la moitié de la profondeur radiale maximale de la lamelle (8) .

14. Pneu (1) selon l'une quelconque des revendications précédentes 1 à 13, dans lequel au moins une première déformation (302, 303) comprend au moins deux parties en creux (304) dans une direction circonférentielle, qui s'étendent sur des côtés opposés par rapport à un plan perpendiculaire à la paroi transversale du bloc (20, 21).

15. Pneu (1) selon la revendication 14, dans lequel lesdites au moins deux parties en creux (304) s'étendent radialement sur toute la profondeur de la lamelle transversale (8).

16. Pneu (1) selon l'une quelconque des revendications précédentes 1 à 15, dans lequel chaque paroi transversale du bloc (20, 21) de ladite au moins une rangée circonférentielle a deux premières déformations (302, 303) axialement côte-à-côte.

17. Pneu (1) selon la revendication 14, dans lequel lesdites deux premières déformations (302, 303) présentes sur une paroi transversale du bloc ont des orientations mutuellement opposées le long d'une direction circonférentielle.

18. Pneu (1) selon l'une quelconque des revendications précédentes, dans lequel les premières déformations (302, 303) situées dans une position essentiellement correspondante de deux lamelles consécutives sur la circonférence (8) ont, de manière circonférentielle, une même orientation.

19. Pneu (1) selon l'une quelconque des revendications précédentes, dans lequel ladite au moins une première déformation (302, 303) a une profondeur mesurée sur la surface radialement externe de la bande de roulement inférieure ou égale à environ 8 mm.

20. Bande de roulement d'un pneu pour roues de véhicule, comprenant une partie annulaire centrale (L1) à travers un plan équatorial (X-X) et deux parties annulaires d'épaulement (L2, L3), situées sur des côtés axialement opposés par rapport à la partie annulaire centrale (L1), la partie annulaire centrale étant séparée de chaque partie annulaire d'épaulement par une première rainure circonférentielle respective (3, 4), où la partie annulaire centrale (L1) comprend une pluralité de blocs (20, 21) agencés en au moins une rangée circonférentielle comprise entre deux rainures circonférentielles (3, 4, 5, 6, 7), et au moins une lamelle (8) adaptée pour séparer deux blocs consécutifs sur la circonférence (20, 21) ; chaque bloc étant délimité sur la circonférence, au moyen de deux lamelles consécutives (8), par deux parois opposées s'étendant selon une trajectoire essentiellement transversale par rapport au plan équatorial (X-X) du pneu (1) et selon une trajectoire essentiellement radiale à partir de la partie inférieure de la lamelle (8) à la surface radialement la plus externe du bloc (20, 21) ; au moins une première déformation (302 ; 303) est présente sur au moins l'une des parois transversales opposées d'un premier bloc (20, 21) ;
ladite au moins une première déformation (302, 303) définissant une première contrainte conjointement avec une première déformation correspondante (302, 303) présente sur la paroi frontale d'un deuxième bloc (20, 21) adjacent sur la circonférence audit premier bloc (20, 21) ; ladite première contrainte agissant au moins dans une direction circonférentielle ;
- au moins une deuxième déformation (202) est présente sur au moins l'une des parois transversales opposées dudit premier bloc (20, 21) ;
- ladite deuxième déformation (202) définit une deuxième contrainte conjointement avec une deuxième déformation correspondante (202) présente sur la paroi frontale dudit deuxième bloc (20, 21) adjacent sur la circonférence audit premier bloc (20, 21), ladite deuxième contrainte agissant au moins dans une direction radiale ;
- ladite deuxième déformation (202) s'étend au moins sur ladite première déformation (302 ; 303) de sorte que lesdites première et deuxième déformations soient situées au niveau de la même partie de paroi du bloc ;
- ladite deuxième déformation (202) s'étend axialement de manière à avoir une trajectoire située à différentes profondeurs radiales de la lamelle (8) ;
**caractérisé en ce que**
- ladite deuxième déformation s'étend dans une partie centrale sur la paroi transversale du premier et/ou du deuxième bloc(s) avec une extension axiale inférieure à 70% de l'extension axiale de la paroi transversale du premier et/ou du deuxième bloc(s) ;
- ladite deuxième déformation s'étend de manière circonférentielle sur ladite première déformation dans une direction opposée à la direction de roulement du pneu ;
et **en ce que**
- sur au moins l'une des parois transversales opposées dudit premier bloc (20, 21) au moins une troisième déformation (402) est présente en ayant une profondeur diminuant en tout d'une extrémité axiale de la paroi transversale (209) du premier bloc vers une région centrale de ladite paroi transversale et où ladite troisième déformation a une extension radiale maximale inférieure à 30% de la profondeur maximale (h) de la lamelle ;
- ladite troisième déformation (402) définit une troisième contrainte conjointement avec une troisième déformation correspondante (402) présente sur la paroi frontale dudit deuxième bloc (20, 21) adjacent sur la circonférence audit premier bloc (20, 21), ladite troisième contrainte agissant au moins dans une direction radiale.

21. Procédé d'augmentation de la performance d'un pneu, ledit procédé comportant le fait :
de fabriquer un pneu ayant une bande de roulement comprenant :
une partie annulaire centrale (L1) à travers un plan équatorial (X-X) et deux parties annulaires d'épaulement (L2, L3), situées sur des côtés axialement opposés par rapport à la partie annulaire centrale (L1), la partie annulaire centrale étant séparée de chaque partie annulaire d'épaulement par une première rainure circonférentielle respective (3, 4), où la partie annulaire centrale (L1) comprend une pluralité de blocs (20, 21), agencés en au moins une rangée circonférentielle comprise entre deux rainures circonférentielles (3, 4, 5, 6, 7), et au moins une lamelle (8) adaptée pour séparer deux blocs consécutifs sur la circonférence (20, 21) ; chaque bloc étant délimité sur la circonférence, au moyen de deux lamelles consécutives (8), par deux parois opposées s'étendant selon une trajectoire essentiellement transversale par rapport au plan équatorial (X-X) du pneu (1) et selon une trajectoire essentiellement radiale à partir de la partie inférieure de la lamelle (8) à la surface radialement la plus externe du bloc (20, 21) ; au moins une première déformation (302 ; 303) est présente sur au moins l'une des parois transversales opposées d'un premier bloc (20, 21) ;
ladite au moins une première déformation (302, 303) définissant une première contrainte conjointement avec une première déformation correspondante (302, 303) présente sur la paroi frontale d'un deuxième bloc (20, 21) adjacent sur la circonférence audit premier bloc (20, 21) ; ladite première contrainte agissant au moins dans une direction circonférentielle ;
- au moins une deuxième déformation (202) est présente sur au moins l'une des parois transversales opposées dudit premier bloc (20, 21) ;
- ladite deuxième déformation (202) définit une deuxième contrainte conjointement avec une deuxième déformation correspondante (202) présente sur la paroi frontale dudit deuxième bloc (20, 21) adjacent sur la circonférence audit premier bloc (20, 21), ladite deuxième contrainte agissant au moins dans une direction radiale ;
- ladite deuxième déformation (202) s'étend au moins sur ladite première déformation (302 ; 303) de sorte que lesdites première et deuxième déformations soient situées au niveau de la même partie de paroi du bloc ;
- ladite deuxième déformation (202) s'étend axialement de manière à avoir une trajectoire située à différentes profondeurs radiales de la lamelle (8) ;
**caractérisé en ce que**
- ladite deuxième déformation s'étend dans une partie centrale sur la paroi transversale du premier et/ou du deuxième bloc(s) avec une extension axiale inférieure à 70% de l'extension axiale de la paroi transversale du premier et/ou du deuxième bloc(s) ;
- ladite deuxième déformation s'étend de manière circonférentielle sur ladite première déformation dans une direction opposée à la direction de roulement du pneu ;
et **en ce que**
- sur au moins l'une des parois transversales opposées dudit premier bloc (20, 21), au moins une troisième déformation (402) est présente en ayant une profondeur diminuant en tout d'une extrémité axiale de la paroi transversale (209) du premier bloc vers une région centrale de ladite paroi transversale et où ladite troisième déformation a une extension radiale maximale inférieure à 30% de la profondeur maximale (h) de la lamelle ;
- ladite troisième déformation (402) définit une troisième contrainte conjointement avec une troisième déformation correspondante (402) présente sur la paroi frontale dudit deuxième bloc (20, 21) adjacent sur la circonférence audit premier bloc (20, 21), ladite troisième contrainte agissant au moins dans une direction radiale.
